Europäisches Patentamt

European Patent Office

Office européen des brevets

(11) Publication number: **0 200 509**
**B1**

# EUROPEAN PATENT SPECIFICATION

(45) Date of publication of patent specification: **21.09.88**

(21) Application number: **86303172.0**

(22) Date of filing: **25.04.86**

(51) Int. Cl.⁴: **F 16 K 47/04,** F 01 D 17/14

(54) **Plug for a modulating control valve for a steam turbine.**

(30) Priority: **25.04.85 US 727172**

(43) Date of publication of application:
**05.11.86 Bulletin 86/45**

(45) Publication of the grant of the patent:
**21.09.88 Bulletin 88/38**

(84) Designated Contracting States:
**BE CH DE FR GB IT LI SE**

(56) References cited:
**EP-A-0 023 172
EP-A-0 075 211
FR-A-1 347 778
FR-A-2 192 262
US-A-2 289 239
US-A-2 297 535
US-A-3 703 273**

(73) Proprietor: **WESTINGHOUSE ELECTRIC
CORPORATION
Westinghouse Building Gateway Center
Pittsburgh Pennsylvania 15235 (US)**

(72) Inventor: **Dawawala, Suryakant Karsanlal
2974 Harbour Landing Way
Casselberry Florida 32707 (US)**
Inventor: **La Coste, Bernard Louis
2701 Naamans Road
Wilmington Delaware 19810 (US)**

(74) Representative: **van Berlyn, Ronald Gilbert
23, Centre Heights
London, NW3 6JG (GB)**

Courier Press, Leamington Spa, England.

## Description

This invention relates to a valve, and in particular to control valves for steam turbines and specifically to a plug for such a valve (see e.g. US—A—2289239 or US—A—2297535).

Modulating control valves are used to regulate the inlet steam flow to the turbine. When controlling steam flow at low levels, supersonic velocities are reached adjacent the area where the plug and seat contact resulting in shock waves which act on the plug causing flow induced vibrations and excessive noise. To minimize the flow induced plug vibration and excessive noise levels special attention must be given to the design of the internal flow geometry of the plug and seat.

According to the present invention, a valve comprising a toroidal shaped seat, a cylindrical stem, a mushroom shaped plug extending from said stem, said mushroom shaped plug having a dome portion that mates with said toroidal shaped seat to close off the flow of fluid flowing through said valve, and said plug also having a frustoconical portion with a large diameter end and a small diameter end so disposed in said dome portion that said frustoconical portion mates with said toroidal seat to close off the flow of fluid flowing through said valve and said frustoconical portion encompasses an included angle of about 68° in order to reduce flow induced vibrations and noise as fluid flowing between said seat and plug reaches sonic velocity.

Conveniently, the mushroom shaped plug has a dome portion that mates with the toroidal shaped seat to close off the fluid flowing through the valve. The plug also has a frustoconical portion with a large diameter end and a small diameter end so disposed in the dome portion that the frustoconical portion mates with the toroidal seat to close off the flow of fluid flowing through the valve.

The invention will now be described, by way of example, with reference to the accompanying drawings, in which:

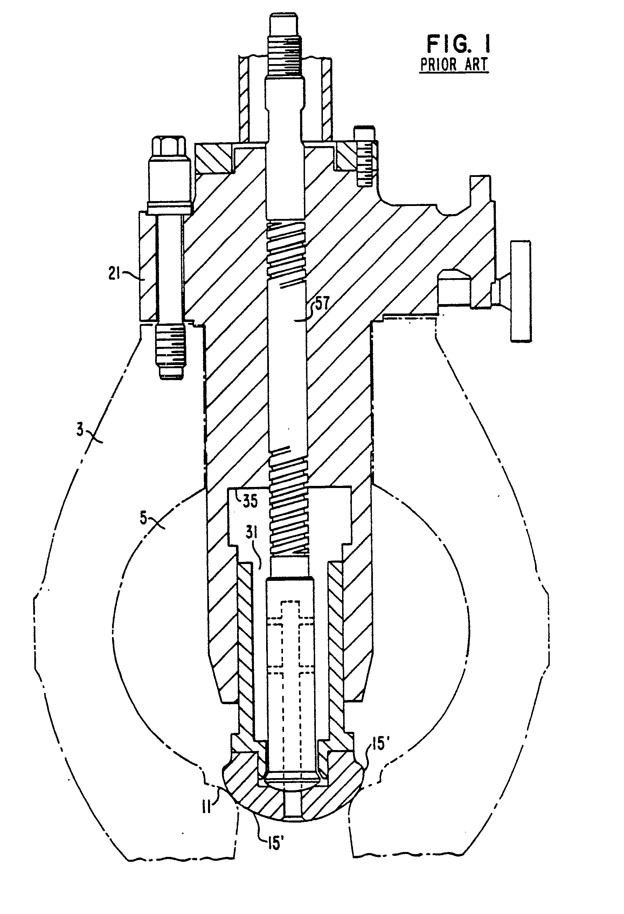

Figure 1 is a partial sectional view of a prior art control valve;

Figure 2 is an enlarged partial sectional view of a seat and plug for the prior art control valve;

Figure 3 is a two dimensional schematic of the prior art flow between the seat and the plug;

Figure 4 is a partial sectional view of a control valve made in accordance with this invention;

Figure 5 is an enlarged partial sectional view of a seat and plug shown in Figure 4;

Figure 6 is a two dimensional schematic of the flow between the seat and the plug in Figure 5;

Figure 7 is an enlarged partial sectional view of an alternative seat and plug; and

Figure 8 is an enlarged partial sectional view of still another alternative seat and plug.

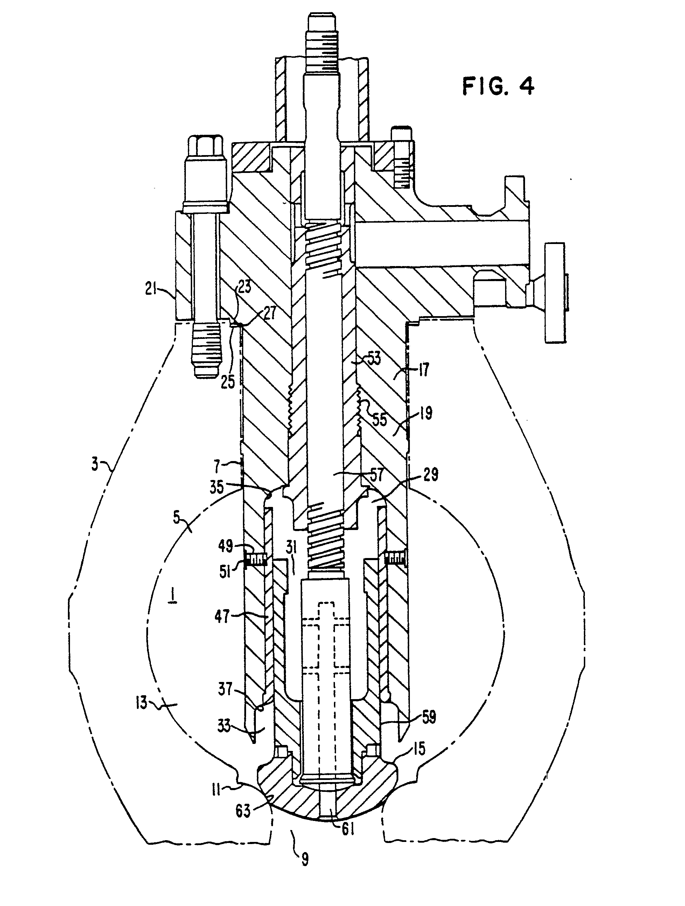

Referring now to the drawings in detail corresponding reference numerals indicate similar parts in the various drawings. Figure 4 illustrates a control valve 1 for a turbine (not shown). The control valve 1 comprises a body 3 having a large cavity 5 disposed therein. The cavity 5 has an elongated generally round first opening 7 on one side of the cavity, the top side as shown in Figure 4, a round second opening 9 with a generally toroidal shaped valve seat 11 disposed therein on a side opposite the first opening 7 and a third opening 13 for admitting steam coincident with the central portion of the cavity 5.

A mushroom shaped valve plug 15 has a domed portion which is disposed in the cavity 5 in such a manner as to mate with the toroidal shaped valve seat 11 to control the flow of steam between the valve seat and plug 11 and 15, respectively.

A bonnet 17 is disposed in the first opening 7 and the bonnet 17 comprises a generally cylindrical portion 19 and an integral flange 21 disposed on one end of the cylindrical portion 19. The flange 21 has a circumferential sealing surface 23, which mates with a circumferential sealing surface 25 disposed on the body encircling the first opening 7. A gasket 27 is disposed between the sealing surfaces 23 and 25 to perform a pressure type seal. The bonnet 17 also has a centrally disposed bore 29 extending therethrough with two counterbores 31 and 33 extending upwardly from the end of the bonnet 17 without the flange 21. The first counterbore 31 is deeper or longer than the second counterbore and terminates with a large fillet radius 35. The second counterbore 33 is sufficiently deep to receive the valve plug 15 and also terminates with a fillet radius 37.

A case hardened sleeve or liner 47 made of a nitro alloy is tightly fit into the first counterbore 31 utilizing a shrink fit. Hardened pins 49 extend through the walls of the bonnet 17 and into, but not through, the sleeve 47 to prevent rotation of the sleeve 47 with respect to the bonnet 17. The pins 49 are held in place by disk 51 which are tack welded to the bonnet 17.

A stem guide bushing 53 is fastened in the bore of the bonnet by engaging threads 55 and a hex end is provided on the stem guide bushing to accept a wrench. A valve stem 57 is slidably disposed in the guide bushing 53 and a plug guide 59 is slidably disposed in the hardened sleeve 47 and affixed to the valve stem 57 and to the valve plug 15 in such a manner that the sliding motion between the valve stem 57 and the plug guide 59 is small. The valve plug 15 has a centrally disposed port 61 extending therethrough. The valve stem 57 closes the port 61 when closing force is applied to the valve stem 57 and opens the port 61 when opening force is applied to the valve stem 57.

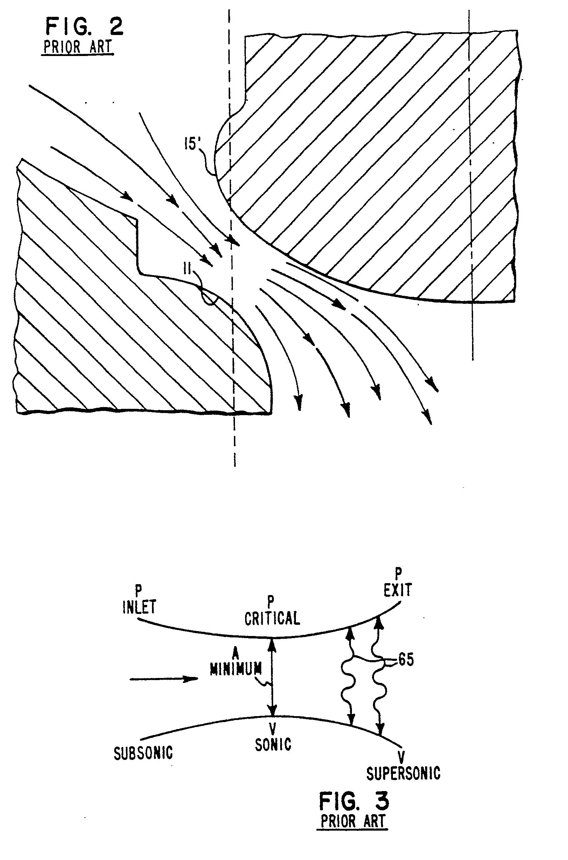

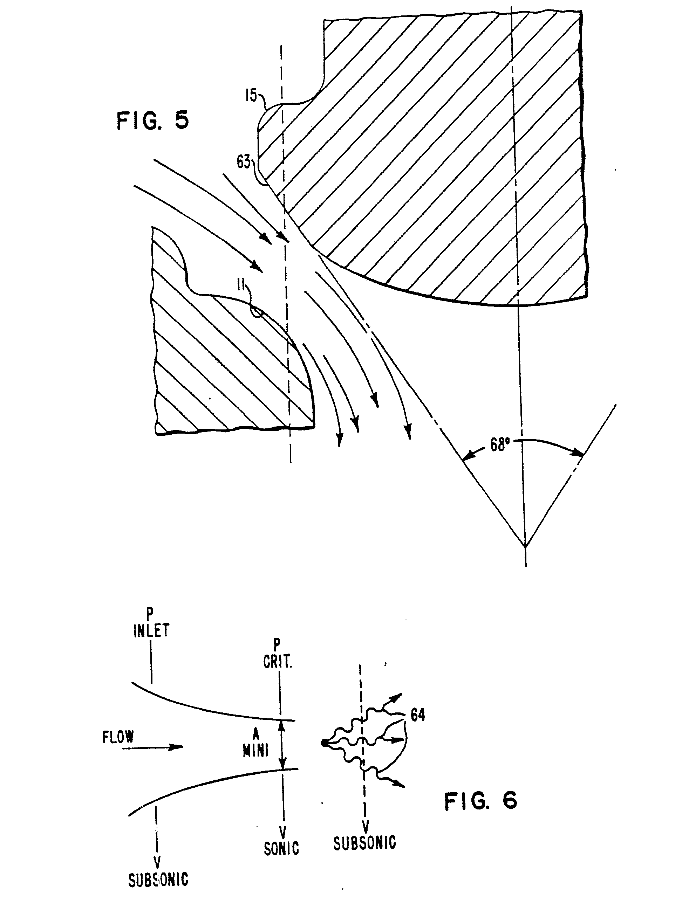

The domed portion of the valve plug 15, as shown best in Figure 5, has a frustoconical portion 63 so disposed therein to have a small diameter end and a large diameter end so that the frustoconical surfaces 63 mate with the toroidal seat 11 adjacent the small diameter end thereof. Preferably the included angle of the frustoconical portion 63 is generally 68° which causes a circular line to be formed at the small diameter end of the frustoconical shaped portion where that portion joins the dome. This results in a flow separation between the plug 15 and the fluid flowing thereby downstream of this circular line and is represented in the two dimensional flow diagram shown in Figure 6. This figure also shows that the transition from sonic to subsonic results in oblique pressure expansion waves 64, which result in less excitation of the valve plug 15 than the radial pressure shock waves 69 shown in Figure 3 of the prior art transitions from supersonic back to subsonic velocities.

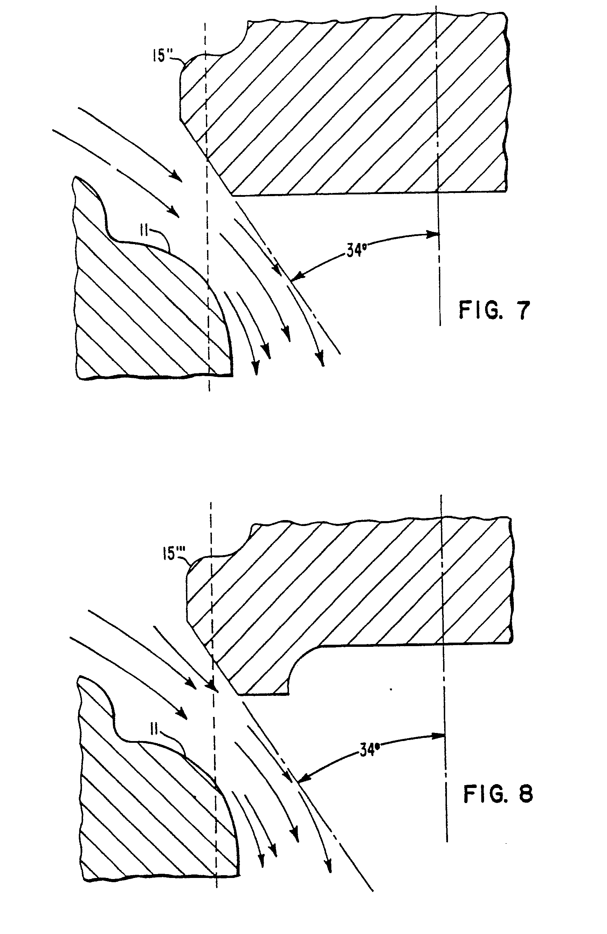

Figure 7 shows an alternative embodiment in which the dome of the mushroom shaped plug 15'' is flattened causing a very abrupt change in direction at the small diameter end of the frustoconical portion to effectuate flow separation downstream of the plug 15''.

Figure 8 shows still another alternative embodiment in which the dome portion of the plug 15''' is not only flattened adjacent the small diameter end of the frustoconical portion, but also has a recessed area providing not only a very abrupt change in direction and an even greater change in direction to effectuate flow separation downstream of the frustoconical portion of the plug 15'''.

Thus by altering the contour of the plug 15 to include a frustoconical portion with an included angle of approximately 68° the diverging portion of the flow passage between the plug 15 and the seat 11 was eliminated so that downstream of the minimum flow area the radial pressure shock waves relating to returning to subsonic flow vibrations 65 in the diverging area are eliminated and oblique pressure expansion waves 63 are formed, but with much less impulse reactions acting on the valve plug 15 than would be present with the radial shock pressure waves 65. To further improve the stability of the plug 15, the freedom of motion of the valve plug 15 under flow excitation is minimized by limiting motion of the plug 15 by providing minimum overhang length of the valve plug past the lower edge of the guide bushing 53 with the smallest possible guide clearance allowable. Plug stability is also improved by providing the maximum possible downstream unbalance force. This is achieved by increasing the effective downstream unbalance area between the plug 15 and the sleeve 47 and the outside diameter of the seat plug contact diameter. These changes in the plug and its related structural elements result in a much more stable control valve.

**Claims**

1. A valve comprising a toroidal shaped seat (11), a cylindrical stem (57), a mushroom shaped plug (15) extending from said stem, said mushroom shaped plug having a dome portion that mates with said toroidal shaped seat to close off the flow of fluid flowing through said valve, and said plug also having a frustoconical portion (63) with a large diameter end and a small diameter end so disposed in said dome portion that said frustoconical portion mates with said toroidal seat to close off the flow of fluid flowing through said valve characterised in that said frustoconical portion encompasses an included angle of about 68° in order to reduce flow induced vibrations and noise as fluid flowing between said seat and plug reaches sonic velocity.

2. A valve as claimed in claim 1, wherein the frustoconical portion (63) is so disposed within the dome portion of the mushroom shaped plug that the frustoconical portion mates with the seat adjacent the small end thereof.

3. A valve as claimed in claim 1 or 2, wherein the small diameter end of the frustoconical portion (63) is so disposed within the dome portion of the plug to define a circular line on the dome in which there is flow separation from the plug after the fluid passes said line.

4. A valve as claimed in claim 3, wherein the dome of the plug is flat downstream of the small diameter end of the frustoconical portion.

5. A valve as claimed in claim 4, wherein the flat portion of the plug is counterbored.

6. A valve as claimed in claim 5, wherein the motion of the plug is restrained by providing minimum overhanging length of the valve plug past a lower edge of a guide bushing and providing the smallest possible clearance between the plug and the guide bushing.

7. A valve as claimed in claim 6, wherein the stability is improved by providing a maximum downstream unbalanced force by increasing the effective downstream unbalanced area between the plug and a sleeve outside diameter and a seat plug contact diameter.

8. A method of making plugs and seats for valves to minimize flow induced plug vibration and noise as fluid flowing between the plug and seat reaches sonic velocity, comprising the steps of providing a toroidal shaped seat ring (11), providing mushroom shaped plug (15) having a dome portion which mates with the ring seat to close off the flow of fluid flowing through said valve, providing said dome portion with a frustoconical surface disposed to mate with said seat ring characterised in forming the frustoconical surface (63) so that if extended the surface would encompass an included angle of about 68° for the purpose of reducing flow induced vibration and noise when the fluid flowing between the seat and the plug reaches sonic velocity.

9. A method as claimed in claim 8 including the step of providing a flat portion on said plug adjacent the smaller diameter end of said frustoconical portion.

10. A method as claimed in claim 9 including the step of forming a method as set forth in claim 9 and further comprising the step of forming a recess in the flat portion of the plug.

11. A method as claimed in any one of claims 8 to 10 including the step of providing a guide bushing for the plug, providing a bore in the valve for the guide bushing and providing a minimum clearance therebetween to increase the stability of the plug.

12. A method as claimed in claim 11 including the step of providing the maximum downstream unbalance on the plug.

## Patentansprüche

1. Ein Ventil mit einem toroidförmigen Sitz (11), einem zylindrischen Schaft (57), einem pilzförmigen Stopfen, der sich vom Schaft erstreckt, wobei der pilzförmige Stopfen einen kalottenförmigen Teil aufweist, der zum toroidalen Sitz formschlüssig ist, um die Fluidströmung durch das Ventil du stoppen und wobei der Stopfen einen kegelstumpfförmigen Teil (63) mit einem Ende großen Durchmessers und einem Ende kleinen Durchmessers aufweist, der so angeordnet ist, daß der kalottenförmige Teil zum toroidalen Sitz formschlüssig ist, um die Fluidströmung durch das Ventil zu stoppen, dadurch gekennzeichnet, daß der kegelstumpfförmige Teil einen eingeschlossenen Winkel von ungefähr 68° aufweist, um strömungsinduzierte Vibrationen und Geräusche zu reduzieren, wenn die Fluidströmung zwischen dem Sitz und dem Stopfen Schallgeschwindigkeit erreicht.

2. Ein Ventil nach Anspruch 1, bei dem der kegelstumpfförmige Teil (63) so innerhalb des kalottenförmigen Teils des pilzförmigen Stopfens angeordnet ist, daß der kegelstumpfförmige Teil formschlüssig zum Sitz ist, der benachbart zu dessen kleinerem Ende ist.

3. Ein Ventil nach Anspruch 1 oder 2, bei dem das Ende des kegelförmigen Teils (63) mit dem kleineren Durchmesser so innerhalb des kalottenförmigen Teils des Stopfens angeordnet ist, daß eine kreisförmige Linie auf der Kalotte definiert wird, in der eine Trennung der Strömung von Stopfen auftritt, nachdem das Fluid diese Linie passiert.

4. Ein Ventil nach Anspruch 3, bei dem die Kalotte des Stopfens stromabwärts zum Ende des kegelstumpfförmigen Teils mit kleinerem Durchmesser flach ist.

5. Ein Ventil nach Anspruch 4, bei dem der flache Teil des Stopfens angesenkt ist.

6. Ein Ventil nach Anspruch 5, bei dem die Bewegung des Stopfens beschränkt wird, indem eine minimale überhängende Länge des Ventilstopfens über eine untere Kante einer Führungshülse vorgesehen wird ufj der kleinstmögliche Abstand zwischen Stopfen und der Führungshülse gewählt wird.

7. Ein Ventil nach Anspruch 6, bei dem die Stabilität dadurch verbessert wird, daß eine maximale stromabwärts unkompensierte Kraft vorgesehen wird, indem die effektive stromabwärts unkompensierte Fläche zwischen dem Stopfen und einem Außendurchmesser einer Büchse und einem Berührungsdurchmesser Sitz-Stopfen erhöht wird.

8. Ein Verfahren zur Herstellung von Stopfen und Sitzflächen für Ventile zur Minimalisierung von strömungsinduzierten Vibrationen des Stopfens und von Geräuschen, wenn das zwischen dem Stopfen und dem Sitz strömende Fluid Schallgeschwindigkeit erreicht, in dem die Schritte enthalten sind des Vorsehens eines toroidförmigen Sitzrings (11), des Vorsehens eines pilzförmigen Stopfens (15) mit einem kalottenförmigen Teil, der zum Ringsitz formschlüssig ist, um die Fluidströmung durch das Ventil zu stoppen, des Ausgestaltens des kalottenförmigen Teils mit einer kegelstumpfförmigen Oberfläche, die formschlüssig zum Sitzring angeordnet ist, gekennzeichnet durch Formen der kegelstumpfförmigen Oberfläche (63) so daß sie bei Verlängerung einen eingeschlossenen Winkel von ungefähr 68° bilden würde, um strömungsinduzierte Vibration und Geräusch zu reduzieren, wenn das zwischen der Stirnfläche und dem Stopfen strömende Fluid Schallgeschwindigkeit erreicht.

9. Ein Verfahren nach Anspruch 8, in dem der Schritt enthalten ist, einen flachen Teil auf dem Stopfen benachbart zum Ende des kegelförmigen Teils mit dem kleineren Durchmesser vorzusehen.

10. Ein Verfahren nach Anspruch 9, in dem weiter der Schritt enthalten ist, im flachen Teil des Stopfens eine Vertiefung auszubilden.

11. Ein Verfahren nach irgendeinem der Ansprüche 8 bis 10, in dem der Schritt enthalten ist, eine Führungshülse für den Stopfen vorzusehen, eine Bohrung im Ventil für die Führungshülse vorzusehen und einen minimalen Abstand dazwischen vorzusehen, um die Stabilität des Ventils zu erhöhen.

12. Ein Verfahren nach Anspruch 11, in dem der Schritt enthalten ist, die maximale Stromabwärts-Unbalanz auf dem Stopfen vorzusehen.

## Revendications

1. Robinet-vanne comportant un siège (11) de forme torique, une tige cylindrique (57), un obturateur (15) en forme de champignon qui s'étend à partir de ladite tige, ledit obturateur en forme de champignon étant pourvu d'une partie formant dôme qui épouse la forme torique dudit siège de manière à arrêter complètement l'écoulement de fluide qui s'écoule à travers ledit robinet-vanne, et ledit obturateur étant aussi pourvu d'une partie tronconique (63) ayant une extrémité de grand diamètre et une extrémité de petit diamètre disposée dans ladite partie formant dôme de telle sorte que ladite partie tronconique épouse ledit siège torique de manière à arrêter complètement l'écoulement de fluide qui s'écoule à travers le robinet-vanne, caractérisé en ce que ladite partie tronconique présente un angle au sommet d'environ 68° afin de réduire les vibrations et le bruit induits par l'écoulement lorsque le fluide s'écoulant entre lesdits siège et obturateur atteint une vitesse sonique.

2. Robinet-vanne selon la revendication 1, dans lequel la partie tronconique (63) est disposée à l'intérieur de la partie formant dôme de l'obturateur en forme de champignon de telle sorte que la partie tronconique épouse la zone du siège adjacente à la petite extrémité de celui-ci.

3. Robinet-vanne selon la revendication 1 ou la revendication 2, dans lequel l'extrémité de petit diamètre de la partie tronconique (63) est disposée à l'intérieur de la partie formant dôme de l'obturateur de façon à définir sur le dôme une ligne circulaire où l'écoulement se sépare de l'obturateur après que le fluide a dépassé ladite ligne.

4. Robinet-vanne selon la revendication 3, dans lequel le dôme de l'obturateur est plat en aval de l'extrémité de petit diamètre de la partie tronconique.

5. Robinet-vanne selon la revendication 4, dans lequel la partie plate de l'obturateur comporte un trou épaulé.

6. Robinet-vanne selon la revendication 5, dans lequel le mouvement de l'obturateur est entravé par le fait qu'une longueur minimale, en surplomb de l'obturateur du robinet-vanne, est prévue au-delà du bord inférieur d'un manchon de guidage et qu'il existe le plus petit jeu possible entre l'obturateur et le manchon de guidage.

7. Robinet-vanne selon la revendication 6, dans lequel la stabilité est améliorée par le fait qu'une force non compensée maximale en aval est créée par augmentation de la surface utile non compensée en aval entre l'obturateur et le diamètre extérieur de son chemisage et le diamètre de contact entre siège et obturateur.

8. Procédé pour fabriquer des obturateurs et des sièges de robinets-vannes de façon à minimiser la vibration et le bruit de l'obturateur induits par l'écoulement lorsque le fluide s'écoulant entre l'obturateur et le siège atteint une vitesse sonique, comportant les opérations consistant à utiliser un anneau formant siège (11) de forme torique, à utiliser un obturateur (15) en forme de champignon pourvu d'une partie formant dôme qui épouse le siège annulaire de manière à arrêter complètement l'écoulement de fluide qui s'écoule à travers le robinet-vanne, à pourvoir ladite partie formant dôme d'une surface tronconique disposée de façon à épouser ledit anneau formant siège caractérisé par le fait que l'on forme la surface tronconique (63) de telle manière que, si elle était prolongée, cette surface présenterait un angle au sommet d'environ 68° afin de réduire la vibration et le bruit induits par l'écoulement lorsque le fluide s'écoulant entre le siège et l'obturateur atteint une vitesse sonique.

9. Procédé selon la revendication 8 comprenant l'opération consistant à munir ledit obturateur d'une partie plate adjacente à l'extrémité de plus petit diamètre de ladite partie tronconique.

10. Procédé selon la revendication 9 comprenant l'opération consistant à organiser un procédé comme exposé dans la revendication 9 et comprenant en outre l'opération consistant à former un évidement dans la partie plate de l'obturateur.

11. Procédé selon l'une quelconque des revendications 8 à 10 comprenant l'opération consistant à utiliser un manchon de guidage pour l'obturateur, à réaliser un alésage dans le robinet-vanne pour le manchon de guidage et à laisser un jeu minimal entre eux de façon à augmenter la stabilité de l'obturateur.

12. Procédé selon la revendication 11 comprenant l'opération consistant à soumettre l'obturateur à une force non compensée maximale en aval.

0 200 509

FIG. 1
PRIOR ART

FIG. 2
PRIOR ART

15'

11

P
INLET

P
CRITICAL

P
EXIT

A
MINIMUM

65

SUBSONIC

V
SONIC

V
SUPERSONIC

FIG. 3
PRIOR ART

0 200 509

FIG. 4

3

FIG. 5

15

63

11

68°

FIG. 6

P
INLET

P
CRIT.

FLOW

MINI

64

SONIC

SUBSONIC

SUBSONIC

4

FIG. 7

FIG. 8